(19) **Europäisches Patentamt**
**European Patent Office**
**Office européen des brevets**

(11) **EP 1 177 334 B1**

(12) **EUROPÄISCHE PATENTSCHRIFT**

(45) Veröffentlichungstag und Bekanntmachung des Hinweises auf die Patenterteilung:
**15.07.2009   Patentblatt 2009/29**

(51) Int Cl.:
**D01B 1/10** *(2006.01)*     **F16D 69/02** *(2006.01)*
**D01G 13/00** *(2006.01)*     **E04B 1/74** *(2006.01)*

(21) Anmeldenummer: **00931104.4**

(22) Anmeldetag: **03.05.2000**

(86) Internationale Anmeldenummer:
**PCT/EP2000/003953**

(87) Internationale Veröffentlichungsnummer:
**WO 2000/066819 (09.11.2000 Gazette 2000/45)**

(54) **VERSTÄRKUNGS- UND/ODER PROZESSFASERN AUF DER BASIS VON PFLANZENFASERN UND VERFAHREN ZU DEREN HERSTELLUNG**

REINFORCING FIBERS AND/OR PROCESSING FIBERS BASED ON PLANT FIBERS AND METHOD FOR THE PRODUCTION THEREOF

FIBRES DE RENFORCEMENT ET/OU DE TRAITEMENT A BASE DE FIBRES VEGETALES ET PROCEDE PERMETTANT DE LES PRODUIRE

(84) Benannte Vertragsstaaten:
**AT BE CH CY DE DK ES FI FR GB GR IE IT LI LU MC NL PT SE**

(30) Priorität: **03.05.1999   DE 19920225**

(43) Veröffentlichungstag der Anmeldung:
**06.02.2002   Patentblatt 2002/06**

(73) Patentinhaber: **ECCO Gleittechnik GmbH**
**82402 Seeshaupt (DE)**

(72) Erfinder:
• **VON DRACH, Volker**
**D-81475 München (DE)**

• **HENSEL, Karl-Heinz**
**D-82402 Seeshaupt (DE)**

(74) Vertreter: **Kinzebach, Werner et al**
**Reitstötter, Kinzebach & Partner**
**Patentanwälte**
**Sternwartstrasse 4**
**81679 München (DE)**

(56) Entgegenhaltungen:
**EP-A- 0 000 840        EP-A- 0 654 616**
**DE-A- 4 211 010        DE-U- 9 007 726**
**DE-U- 9 007 773        DE-U- 9 413 955**

EP 1 177 334 B1

## Beschreibung

Die vorliegende Erfindung betrifft Verstärkungs- und/oder Prozeßfasern auf der Basis von Pflanzenfasern, deren Elementarfasern fibrilliert sind, sowie ein Verfahren zu deren Herstellung.

Pflanzenfasern umfassen beispielsweise Bastfasern, die aus den Pflanzenstengeln von Faserpflanzen gewonnen werden. Die Bastfasern setzen sich aus Fasern zusammen, bei denen mehrere Elementarfasern, die Einzelzellen darstellen, zu Faserbündeln vereinigt sind. Bei der Fibrillierung wird eine Elementarfaser, die typischerweise einen Durchmesser zwischen 10 $\mu$m und 30 $\mu$m besitzt, seitlich in feinere Fasern, die als Fibrillen bezeichnet werden, aufgespalten. Die Länge solcher Fibrillen ist typischerweise kleiner als 300 $\mu$m und ihr Durchmesser zwischen 1 $\mu$m und 5 $\mu$m. In der Regel bleiben die Fibrillen bei der Fibrillierung an einem Ende mit der Faser verbunden.

Des weiteren weisen die Pflanzenstengel von Bastfaserpflanzen Scheben auf. Darunter versteht man die nicht Bastfasern enthaltenen holzigen Bestandteile der Faserpflanzen.

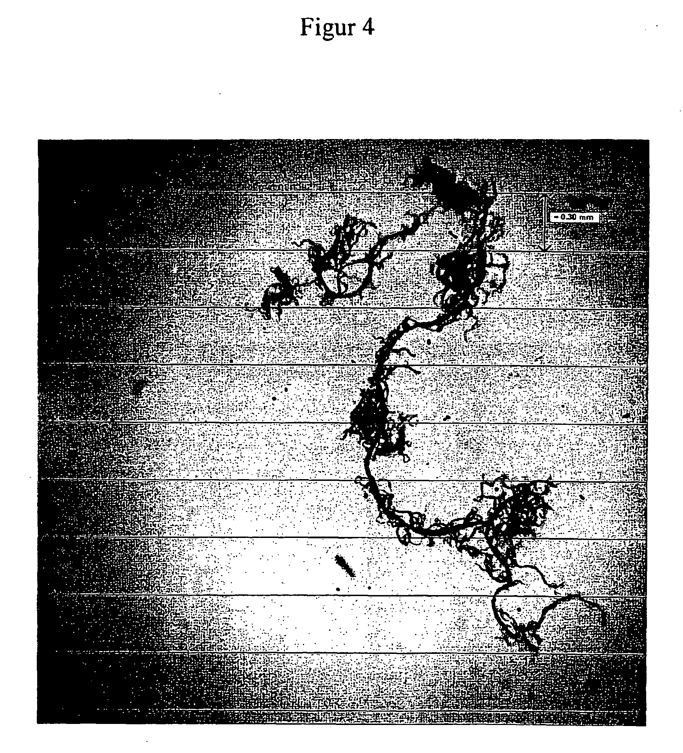

Herkömmlicherweise werden Verstärkungs- oder Prozeßfasern auf der Basis von synthetischen Aramidfasern hergestellt, die mittels spezieller Mühlen fibrilliert werden. In Abbildung 4 ist eine Mikroskopaufnahme einer fibrillierten Aramidfaser dargestellt. Durch die Fibrillierung erhält eine Faser makroskopisch einen wolligen Habitus.

Als Prozeßfasern haben fibrillierte Aramidfasern günstige Wirkungen auf die Verarbeitungseigenschaften in Verbundwerkstoffen der chemischen Industrie, wie beispielsweise in Reibbelägen und Dichtungen. Dabei zeichnen sich die Aramidfasern dadurch aus, daß mit ihnen ein besonders hoher Fibrillenanteil bei der Fibrillierung erreicht werden kann.

Nachteilig an fibrillierten Aramidfasern ist jedoch, daß sie sehr teuer sind und giftige Zersetzungsprodukte, wie beispielsweise Blausäure, bei hohen Temperaturen freisetzen können, so daß ihre Entsorgung problematisch ist.

Des weiteren gibt es Verstärkungs- oder Prozeßfasern auf der Basis von Pflanzenfasern bzw. organischen Naturfasern. Derartige Fasern sind in der DE 19 703 634 A1 beschrieben. Die dort beschriebenen Fasern können durch Aufschluß mittels Ultraschall gewonnen werden, wobei die Fasern aus dem in den Stengeln vorhandenen Verbund herausgelöst werden und ein Vereinzeln der Fasern erfolgt. Es ist bekannt, derartige Fasern naß zu mahlen. Auf diese Weise erhielt man jedoch bisher einen anderen Fasertyp, nämlich eine sehr kurze, zerriebene Elementarfaser. Den typischen Aufbau einer fibrillierten Faser, die Elementarfasern mit einem mittleren Durchmesser von ungefähr 15 $\mu$m und an einem Ende mit diesen verbundene Fibrillen mit einem mittleren Durchmesser von kleiner als 5 $\mu$m aufweist, erhält man mit einem derartigen Nußmahlverfahren nicht. Die unten erläuterte spezifische Oberfläche nach Blaine-Dyckerhoff ist bei diesen naß zermahlenen Fasern allerdings relativ hoch. Die Ursache hierfür liegt jedoch nicht in einem hohen Fibrillierungsgrad, wie er hier definiert ist, sondern in der starken Einkürzung der Fasern. Bisher konnten somit Fasern auf der Basis von Pflanzenfasern synthetische fibrillierte Aramidfasern nicht ersetzen.

Es ist deshalb die Aufgabe der vorliegenden Erfindung, Verstärkungs- und/oder Prozeßfasern bereitzustellen, die auf Pflanzenfasern basieren und die synthetische fibrillierte Aramidfasern ersetzen können.

Eine weitere Aufgabe der vorliegenden Erfindung ist es, auf Pflanzenfasern basierende Verstärkungs- und/oder Prozeßfasern bereitzustellen, die sich gut mit fibrillierten Aramidfasern mischen lassen.

Ferner ist es eine Aufgabe der vorliegenden Erfindung, ein Verfahren zu deren Herstellung bereitzustellen.

Erfindungsgemäß wird diese Aufgabe durch Verstärkungs- und/oder Prozeßfasern auf der Basis von Pflanzenfasern gelöst, deren Elementarfasern fibrilliert sind, wobei der Fibrillenanteil der Elementarfasern größer als 3 Flächenprozent und kleiner als 50 Flächenprozent ist. Bei einem derartig hohen Fibrillenanteil können die erfindungsgemäßen Verstärkungs- und/oder Prozeßfasern fibrillierte Aramidfasern in vielen Bereichen ersetzen.

Die erfindungsgemäßen Fasern können dabei beispielsweise auf Flachs-, Hanf-, Sisal-, Jute- oder Ramiefasern basieren. Vorteilhaft an der Verwendung derartiger Pflanzenfasern ist, daß sie einen wesentlich niedrigeren Preis als synthetische Aramidfasern besitzen und bei hohen Temperaturen bzw. bei der Entsorgung keinerlei ökologisch problematische Produkte entstehen.

Des weiteren können die erfindungsgemäßen Fasern mit fibrillierten Aramidfasern gemischt werden, um so preislich günstigere Verstärkungs- und/oder Prozeßfasern herzustellen. Dabei kann der Gewichtsanteil der erfindungsgemäßen Fasern zwischen 10 % und 90 % liegen, wobei ein Gewichtsanteil zwischen 50 % und 80 % bevorzugt ist.

Des weiteren können die erfindungsgemäßen Fasern entweder weitgehend schebenfrei sein oder aus einem Gemisch aus fibrillierten Fasern und Scheben bestehen. Dabei ist es je nach Anwendung vorteilhaft, entweder den Schebenanteil unter 10 Gew.-% zu halten oder einen hohen Schebengehalt zwischen 25 Gew.-% und 75 Gew.-% zu wählen. Ein derartiges Faser-Scheben-Gemisch hat den Vorteil, daß es kostengünstiger als reines Fasermaterial ist. Ferner ist ein solches Gemisch bei einigen Anwendungen, wie z.B. bei Reibbelägen, bei denen zusätzliche Füllstoffe erwünscht sind, vorteilhaft.

Vorteilhafterweise kann ein Additiv für Reibbeläge die erfindungsgemäßen Fasern, bevorzugt mit einem Gewichtsanteil zwischen 5 und 95 Gew.-%, zusammen mit Zinnsulfiden enthalten.

Vorteilhafterweise kann erfindungsgemäß ferner ein Reibbelag oder eine Dichtung hergestellt werden, die die erfindungsgemäßen Fasern umfassen, wobei bevorzugt der Reibbelag Zinnsulfide in einer Menge von 0,5 bis 10 Gew.-%, bezogen auf die Gesamtmenge der Schmierstoffe enthält.

Bei dem erfindungsgemäßen Verfahren zur Herstellung von Verstärkungs- und/oder Prozeßfasern auf der Basis von Pflanzenfasern wird das Fasermaterial in einer Wirbelluftanlage gemahlen. Durch die Verwendung einer derartigen Mahlanlage konnte eine besonders gute Fibrillierung der Elementarfasern der Pflanzenfasern erzielt werden. Vorteilhafterweise kann als Ausgangsmaterial durch Ultraschall aufgeschlossenes Fasermaterial, das ggf. auch noch Scheben umfassen kann, verwendet werden.

Im folgenden werden Ausführungsbeispiele der vorliegenden Erfindung mit Bezug zu den Zeichnungen näher erläutert.

Figur 1     zeigt eine Mikroskopaufnahme einer fibrillierten Hanffaser,

Figur 2     zeigt eine Mikroskopaufnahme eines Gemisches mit 80 % fibrillierten Hanffasern und 20 % fibrillierten Aramidfasern,

Figur 3     zeigt eine Mikroskopaufnahme eines Gemisches mit 50 % fibrillierten Hanffasern und 50 % fibrillierten Aramidfasern,

Figur 4     zeigt eine Mikroskopaufnahme einer herkömmlichen fibrillierten Aramidfaser.

1. Erstes Ausführungsbeispiel:

Beim ersten Ausführungsbeispiel wurden die erfindungsgemäßen Fasern mittels einer Labormühle hergestellt. Als Labormühle wurde eine für einen anderen Einsatzzweck konzipierte Mühle zur Herstellung von Pulvern im Lebensmittelbereich verwendet. Die Mühle wird von der Firma Moulinex hergestellt und ist unter der Typenbezeichnung 320 im Handel erhältlich. Es wurde überraschenderweise gefunden, daß mit solch einer Labormühle eine besonders gute Fibrillierung von Pflanzenfasern, insbesondere von Hanffasern erzielt werden konnte.

Die Labormühle besteht aus einem zylindrischen Stator und einem in der Achse des Statorzylinders angeordnetem Rotor. An dem Rotor sind zwei Messer befestigt, die sich radial zum Stator hin erstrecken. Bei einer radialen Länge der Messer von ungefähr 50 mm sind die beiden Messer in vertikaler Richtung um 12 mm gegeneinander versetzt. Die Labormühle zeichnet sich insbesondere dadurch aus, daß an der Innenwandung des Stators am Boden alle 10 ° Innenrippen vorgesehen sind, die sich ungefähr bis zur Höhe des oberen Messers an der Innenwandung parallel zur Rotorachse erstrecken. Es wird angenommen, daß die besonders gute Fibrillierung der Hanffasern durch diese Innenrippen erzeugt wird, da bei einer vergleichbaren Mühle ohne Innenrippen eine sehr viel schlechtere Fibrillierung der Hanffasern erzeugt wurde. Es wird ferner angenommen, daß bei einer Länge der Ausgangsfasern von weniger als 20 mm die Innenrippen verhindern, daß sich das Fasermaterial mit dem Messer mitdreht.

Beim ersten Ausführungsbeispiel wurden die erfindungsgemäßen Fasern dadurch erzeugt, daß Hanffasermaterial mit einem Schebenanteil von kleiner als 10 Gew.-% in die Labormühle gegeben wurde und dort zwischen 30 und 90 sek gemahlen wurde. Die Länge der Ausgangshanffasern war dabei kürzer als 20 mm.

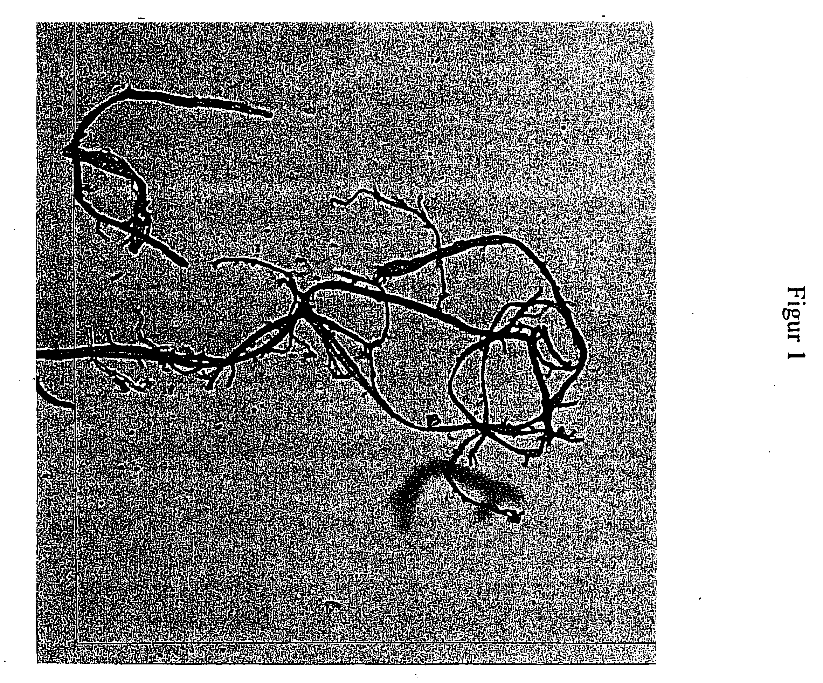

Figur 1 zeigt Hanffasern, die wie vorstehend beschrieben mit der Labormühle fibrilliert wurden, wobei die Mahlzeit 90 sek betrug. Deutlich zu erkennen sind die Elementarfasern, von denen einzelne kleinere Fibrillen abzweigen. Wie bei den Aramidfasern ist eine Ende der Fibrillen mit der jeweiligen Mutterelementarfaser verbunden.

Die Fasern, die gemäß dem ersten Ausführungsbeispiel hergestellt wurden, wobei die Labormühle 90 sek auf die Basisfasern eingewirkt hat, werden im folgenden mit A bezeichnet.

2. Zweites Ausführungsbeispiel:

Im zweiten Ausführungsbeispiel wurde eine kommerzielle Nahlanlage der Firma Altenburger Maschinen Jäkkering GmbH (Ultrarotor Modelltyp IIIa, 75 kw) verwendet. Eine solche Mahlanlage ist in der DE 35 43 370 A1 beschrieben. Bei dieser Mahlanlage werden die Mahlgutpartikel innerhalb der Vielzahl von Luftwirbeln, die von den Mahlplatten erzeugt werden, auf eine hohe Geschwindigkeit beschleunigt. Es wird angenommen, daß die gegenseitigen stöße der Nahlgutpartikel den Mahlvorgang erzeugen. Insbesondere erfolgt das Mahlen nur zu einem geringen Teil durch das Zusammentreffen der Mahlgutteilchen mit den feststehenden und rotierenden Maschinenteilen. Aus diesem Grund wird die verwendete Mahlanlage hier als Wirbelluftmahlanlage bezeichnet.

Überraschenderweise konnten mit dieser Mahlanlage die mit der Labormühle hergestellten fibrillierten Fasern reproduziert und mit modifizierten Einstellungen der Mahlanlage sogar verbessert werden.

Als Ausgangsmaterial zur Herstellung der erfindungsgemäßen Verstärkungs- und/oder Prozeßfasern können organische Naturfasern oder Pflanzenfasern, wie beispielsweise Flachs-, Hanf-, Sisal-, Jute- oder Ramiefasern verwendet werden. Als besonders vorteilhaft hat sich die Verwendung von ultraschallaufgeschlossenem Hanf als Ausgangsmaterial erwiesen. Der Anteil an Scheben ist hier in der Regel geringer als 10 Gew.-%. Die Länge des Ausgangsmaterials war kürzer als 20 mm. Des weiteren kann als Ausgangsmaterial ein Faser-Scheben-Gemisch verwendet werden, wobei der Schebenanteil zwischen 10 Gew.-% und 95 Gew.-% liegen kann.

Gemäß dem zweiten Ausführungsbeispiel wurden drei verschiedene fibrillierte Fasern aus Hanf hergestellt. Die Fasern wurden jeweils bei unterschiedlichem Unterdruck in der Mahlanlage vermahlen. Bei der Faser B1 betrug der Unterdruck, d.h. die Druckdifferenz zu Normaldruck, 45 mbar, bei der Faser B2 25 mbar und bei der Faser B3 12 mbar. Der Unterdruck bewirkt, daß das Fasermaterial durch die Mahlanlage hindurchgefördert wird, so daß die Verweilzeit des Fasermaterials in der Mahlanlage bei höherem Unterdruck kürzer ist. So war die Verweilzeit bei einem Druck von 12 mbar unter Normaldruck ca. 1 sek und bei den Unterdrücken von 25 und 45 mbar 1/2 sek und weniger. Während des Mahlvorgangs war die Temperatur in der Mahlanlage nie höher als 20 °C.

### 3. Vergleichsbeispiel C:

Als Vergleichsbeispiel C wurden fibrillierte Fasern der Firma Schwarzwälder Textilwerke Heinrich Kautzmann GmbH, Schenkenzell untersucht, wobei als Ausgangsmaterial wiederum ultraschallaufgeschlossene Hanffasern verwendet wurden. Die Ergebnisse dieser Untersuchung sind in Tabelle 1 gezeigt.

### 4. Vergleich der erfindungsgemäßen Fasern mit den Vergleichsbeispielen C:

Um die erfindungsgemäßen Fasern zu charakterisieren und mit den Vergleichsfasern zu vergleichen, wurden die fibrillierten Fasern mikroskopisch untersucht. Dabei wurde ein Mikroskop der Firma Carl Zeiss Jena (Binokular "Citoval 2"; Okular: 16-fach; Objektiv: Zoom 0,63 bis 6,3-fach) verwendet. Zur Festlegung des Maßstabs diente ein Okularmikrometer. Die geometrischen Abmessungen der Fasern und Fibrillen wurde halbquantitativ abgeschätzt, wobei die Genauigkeit (ein Sigma) auf 25 %, bezogen auf den jeweiligen Meßwert, abgeschätzt wird. Als Vergrößerung wurde bei der Vermessung der Faserlängen 10:1 gewählt (Objektiv 1,0-fach) und für die Vermessung der Faserdurchmesser 50:1 (Objektiv 5,0-fach).

Im folgenden werden die Begriffe, die zur Charakterisierung der fibrillierten Fasern verwendet werden, definiert.

### Faserbündel:

Als Faserbündel werden hier zwei oder mehr zumindest teilweise zusammenhängende Elementarfasern bezeichnet. Der Durchmesser eines Faserbündels liegt in der Größenordnung zwischen 0,04 mm bis 0,4 mm, wobei 80 Flächenprozent der betrachteten Fasern in diesem Bereich liegen. Bei Durchmessern größer 0,15 mm ist der Querschnitt des Faserbündels oval, wobei als Durchmesser die größte Quererstreckung angegeben ist.

### Elementarfasern:

Als Elementarfasern werden Einzelfasern bezeichnet, wobei 80 Flächenprozent der betrachteten Fasern einen Durchmesser zwischen 0,01 mm bis 0,03 mm besitzen. Eine Elementarfaser stellt biologisch eine Zelle dar.

### Fibrillen:

Als Fibrillen werden zum Zweck des hier durchgeführten Vergleichs an einem Ende mit einer Elementarfaser verbundene feinere Fasern bezeichnet, deren Durchmesser im Bereich zwischen 0,002 mm und 0,01 mm und deren Länge zwischen 0,01 mm und 0,1 mm liegt, wobei wiederum jeweils 80 Flächenprozent der betrachteten Fibrillen in diesem Bereich liegen.

### Fibrillierungsgrad:

Durch den Fibrillierungsgrad soll abgeschätzt werden, welcher Anteil der Länge einer Elementarfaser Fibrillen aufweist. Hierzu wird bei der mikroskopischen Untersuchung eine Elementarfaser in Bereiche von 1 mm Länge eingeteilt. Daraufhin wird bestimmt, ob ein 1 mm langer Bereich mindestens eine Fibrille aufweist oder nicht. Der Fibrillierungsgrad ist dann die Anzahl der 1 mm langen Bereiche mit Fibrillen geteilt durch die Gesamtzahl der untersuchten Bereiche. Es ergibt sich demnach ein Fibrillierungsgrad von 100 %, wenn jeweils nach 1 mm mindestens eine Fibrille an der Elementarfaser auftritt. Falls Fibrillen in größeren Abständen als 1 mm entlang der Elementarfaser auftreten, ist der Fibrillierungsgrad geringer als 100 %.

<u>Anteil an Fibrillen:</u>

Durch die Messung des Fibrillenanteils soll ein genaueres Verfahren zur Verfügung gestellt werden, um die Fibrillierung einer Elementarfaser zu erfassen. Hierzu werden Elementarfasern mikroskopisch untersucht. Es wird die Fläche in der Mikroskopaufnahme bestimmt, die die Fibrillen einnehmen, und die Fläche, die von den Elementarfasern eingenommen werden. Der Fibrillenanteil in Flächenprozent ergibt sich aus der Fläche der Fibrillen geteilt durch die Summe der von den Fibrillen und den Elementarfasern eingenommenen Fläche.

Der Fibrillenanteil in Flächenprozent (Fl.-%) kann in einen Fibrillenanteil in Gew.-% durch die folgende Formel umgerechnet werden:

$$\frac{a}{a + d(1 - a)}$$

wobei a der Fibrillenanteil in Flächenprozenten ist und d das Verhältnis des Durchmessers der Elementarfaser zu dem Durchmesser einer Fibrille. Bei der Umrechnung wird als Näherung angenommen, daß die Fibrillen und die Elementarfasern die gleiche Dichte und jeweils über ihre gesamte Länge den gleichen Durchmesser aufweisen.

Des weiteren bedeutet die Angabe "80 %" hinter einem Merkmal in Tabelle 1, daß 80 Flächenprozent der betrachten Fasern oder Fibrillen innerhalb des angegebenen Bereichs liegen.

<u>Spezifische Oberfläche nach Blaine-Dyckerhoff:</u>

Des weiteren wurde die spezifische Oberfläche nach Blaine-Dyckerhoff der Fasern bestimmt. Zur Messung wurde ein Luftdurchlässigkeitsverfahren nach Blaine (DIN EN 196, Ausgabe 3.90, Teil 6) verwendet. Die Versuchsdurchführung ist wie folgt:

Zunächst wird die Dichte Dd der zu messenden Fasern ermittelt. Bei Zellulosefasern liegt diese in der Regel zwischen 1,2 und 1,5 g/cm$^3$, typischerweise bei 1,4 g/cm$^3$. Aus dieser Dichte und dem in der Meßzelle zur Verfügung stehenden Volumen Vd ergibt sich die Masse Md des zu vermessenden Fasermaterials zu Md=Dd·Vd·e, wobei e die Porosität ist. Die Porosität ist als der Quotient aus dem Porenvolumen und dem Gesamtvolumen definiert. Sie hat hier den Wert 0,500. In der Meßzelle wird das Fasermaterial zwischen zwei Rundfilter kalt eingepreßt, bis der Meßzylinder völlig geschlossen werden kann. Bei dem Meßverfahren wird nun die Zeit gemessen, die eine bestimmte Menge Gas (in der Regel Luft) braucht, um bei einem fest vorgegebenen, anfänglichem Unterdruck das Fasermaterial in der Meßzelle zu durchströmen. Dabei wird die Zeit erfaßt, die der Flüssigkeitspegel in einem U-Rohrmanometer, das mit einem Ende der Meßzelle kommuniziert, braucht, um eine festgelegte Höhendifferenz zu durchlaufen.

Die spezifische Oberfläche nach Blaine-Dyckerhoff errechnet sich dann wie folgt:

$$SS = \sqrt{t}\,\frac{c}{Dd}$$

wobei c ein durch Eichung bestimmter Koeffizient ist.

Das oben angegebene DIN-Verfahren sieht einen festen Wert für die Porosität von 0,500 vor. Sollte das Volumen der Meßzelle für das verwendete Fasermaterial nicht ausreichen, so daß die aus der Dichte und dem Volumen der Meßzelle berechnete Masse des Fasermaterials tatsächlich kleiner ist, ist die Porosität wie folgt zu berechnen:

$$e = 1 - Md/(Vd \cdot Dd)$$

Die spezifische Oberfläche nach Blaine-Dyckerhoff ergibt sich dann wie folgt:

$$SS = \frac{\sqrt{t} \cdot c\sqrt{2e^3}}{(1 - e) \cdot Dd} \qquad (in\ cm^2/g).$$

Die Oberfläche nach Blaine-Dyckerhoff ist mit der tatsächlichen spezifischen Oberfläche korreliert, wobei die tatsächliche spezifische Oberfläche durch Normierung auf einen Vergleichsstandard mit bekannter spezifischer Oberfläche exakt bestimmt werden kann. Die in nachstehender Tabelle angegebenen Meßwerte sind jedoch nicht normiert, sondern geben die spezifische Oberfläche nach Blaine-Dyckerhoff an.

Bei den Messungen wurde ein Luftdurchlässigkeitsprüfer der Firma Toni Technik , Berlin nach Blaine verwendet (Typ ToniPERM).

Der vorstehend angegebene durch Eichung bestimmte Koeffizient c war bei diesem Gerät ungefähr 1.200 sek$^{-1/2}$ cm$^{-1}$.

Im folgenden werden in der Tabelle 1 die Ergebnisse der Messungen zusammengefaßt.

Tabelle 1:

| Fibrillierte Faser: | A | B 1 | B 2 | B 3 | C |
|---|---|---|---|---|---|
| *1. Scheben und Faserbündel:* | | | | | |
| Anteil der Scheben und anderer Nichtfasern an der Gesamtfläche des Fasermaterials | 2 Fl.-% | 2 Fl.-% | 1 Fl.-% | < 1 Fl.-% | < 1 Fl.-% |
| Anteil der Faserbündel an der Gesamtfläche des Fasermaterials | 28 Fl.-% | 48 Fl.-% | 29 Fl.-% | 10 Fl-% | 50 Fl.-% |
| *2. Elementarfasern* | | | | | |
| Anteil an Elementarfasern an der Gesamtfläche des Fasermaterials | 70 Fl.-% | 50 Fl.-% | 70 Fl-% | 90 Fl.-% | 50 R.-% |
| Längenbereich der Elementarfaserbruchstükke nach dem Mahlen (80 %) | 1-5 mm | 1-8 mm | 1-4 mm | 1-3 mm | 1-4 mm |
| Mittlere Länge der Elementarfasern | 3,5 mm | 4 mm | 2,5 mm | 1,5 mm | 2 mm |
| Fibrillierungsgrad | 95 % | 90 % | 95 % | 100 % | 85 % |
| Anteil an Fibrillen (Flächenprozente) | 10 Fl.-% | 5 Fl.-% | 10 Fl.-% | 20 Fl.-% | 3 Fl.-% |
| Anteil an Fibrillen (Gew.-%) | 2,2 Gew.-% | 1,0 Gew.-% | 2,2 Gew.-% | 4,8 Gew.-% | 0,6 Gew.-% |
| Spezifische Oberfläche nch Blaine-Dyckerhoff | 4000-7000 cm$^2$/g | 3000-5000 cm$^2$/g | 4000. 7000 cm$^2$/g | 5000-10000 cm$^2$/g | 2000-4000 cm$^2$/g |

Es wird bemerkt, daß beim Ausgangsmaterial der Fibrillierungsgrad kleiner als 20 Prozent und der Fibrillenanteil einer Elementarfaser kleiner als 1 Flächenprozent bzw. 0,2 Gewichtsprozent war. Es ergibt sich, daß die erfindungsgemäßen Fasern B1, B2, B3 und A alle einen höheren Fibrillierungsgrad und einen höheren Fibrillenanteil einer Elementarfaser als die Vergleichsfaser C aufweisen. Der Vergleich zwischen den gemäß Ausführungsbeispiel 1 (A) und den gemäß Ausführungsbeispiel 2 (B1, B2, B3) erzeugten Fasern zeigt, daß sich jeweils ein ähnlich hoher Fibrillierungsgrad ergibt, wobei sich der Fibrillierungsgrad und der Fibrillenanteil bei der im Ausführungsbeispiel 2 verwendeten Mahlanlage dadurch verbessern läßt, daß das Mahlen bei geringerem Unterdruck erfolgt, d.h. daß die Fasern länger in der Mahlanlage verweilen.

Vergleicht man die jeweiligen spezifischen Oberflächen nach Blaine-Dyckerhoff der fibrillierten Fasern, ergibt sich hier auch hier, daß diese bei den erfindungsgemäß hergestellten Fasern höher ist als bei der Vergleichsfaser C. Die erfindungsgemäß hergestellte Faser B3 kommt dabei sogar an die spezifische Oberfläche nach Blaine-Dyckerhoff von fibrillerten Aramidfasern heran, die zwischen 7000 cm$^2$/g und 12000 cm$^2$/g liegt.

Die spezifische Oberfläche muß jedoch immer im Zusammenhang mit der mittleren Länge der Elementarfasern gesehen werden, da eine hohe spezifische Oberfläche auch durch stark eingekürzte zerriebene Elementarfasern erzeugt werden kann. In diesem Fall liegt jedoch ein anderer Fasertyp vor, der möglicherweise zwar auch Faserbruchstücke mit sehr kleinem Durchmesser aufweist, jedoch keine Fibrillen mit kleinem Durchmesser, die an ihren Mutterelementarfasern mit größerem Durchmesser hängen. Insofern ist die spezifische Oberfläche nach Blaine-Dyckerhoff für die Fibrillierung nur von begrenzter Aussagekraft.

5. <u>Mischung der erfindungsgemäßen Fasern mit fibrillierten Aramidfasern:</u>

Die erfindungsgemäßen fibrillierten Fasern lassen sich als Verstärkungs- oder Prozeßfasern verwenden. Insbesondere lassen sich die erfindungsgemäßen Fasern vorteilhaft in Dichtungen und Reibbeläge sowie in Verbundwerkstoffen, z.B. im Kunststoff- und Baustoffbereich einsetzen.

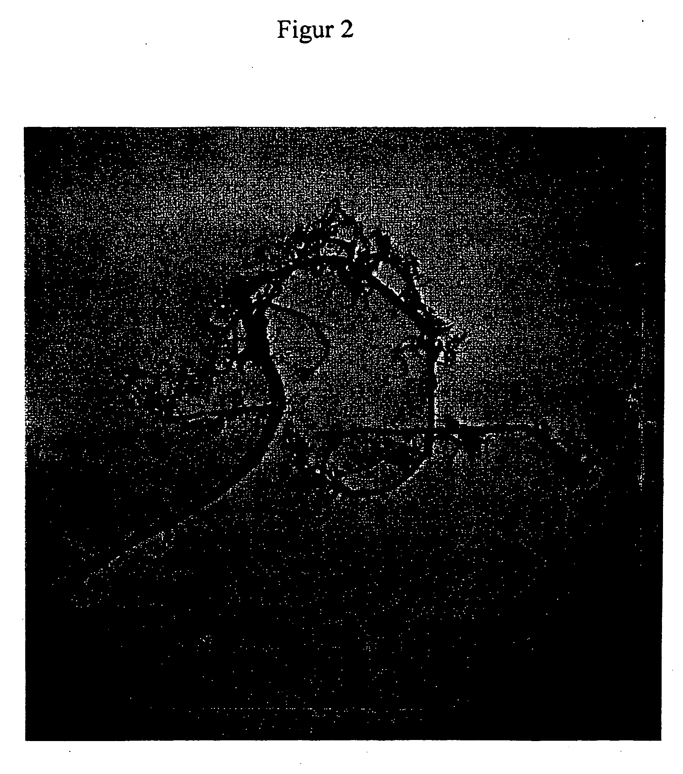

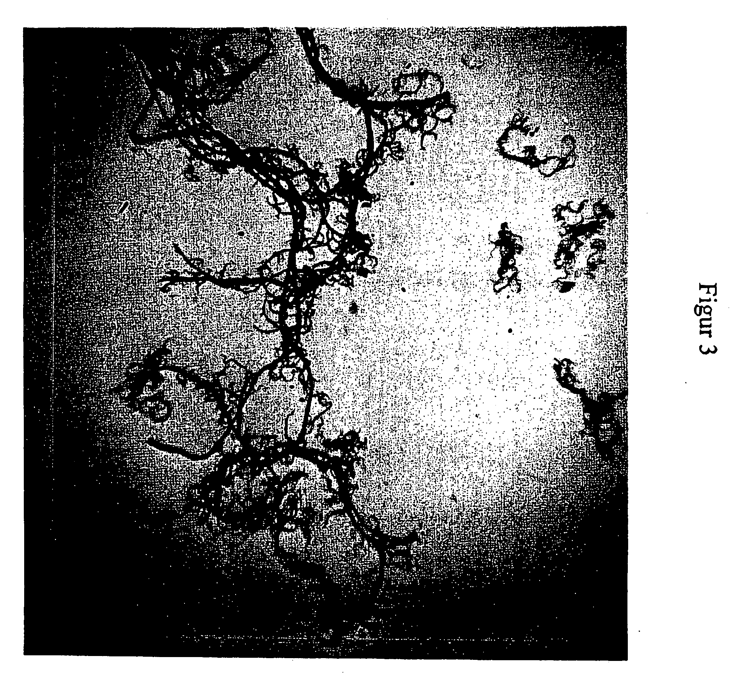

Des weiteren lassen sich mit den erfindungsgemäßen fibrillierten Fasern besonders vorteilhaft Mischfasern herstellen, wenn sie mit reinen fibrillierten Aramidfasern gemischt werden. Derartige Mischfasern besitzen eine besonders hohe Festigkeit sowie eine fast identische Fibrillenstruktur wie reine Aramidfasern, so daß auch diese sich beispielsweise in Dichtungen und Reibbelägen einsetzen lassen. Dabei können die fibrillierten Pflanzenfasern in dem Gemisch in einem Gewichtsanteil von 10 % bis 90 % vorgesehen sein, wobei sich ein Anteil zwischen 50 % und 80 % als besonders vorteilhaft erwiesen hat. In den Figuren 2 und 3 sind Mikroskopaufnahmen derartiger Mischfasern dargestellt, wobei in Figur 2 fibrillierte Aramidfasern zu 20 Gewichtsprozent und fibrillierte Hanffasern zu 80 Gewichtsprozent in dem Gemisch enthalten sind und bei dem in Figur 3 dargestellten Gemisch fibrillierte Aramidfasern und fibrillierte Hanffasern in gleichen Gewichtsanteilen enthalten sind. Der Maßstab ist in allen Aufnahmen gleich. Er ergibt sich aus Figur 4.

6. <u>Faser-Scheben-Gemische:</u>

Des weiteren können erfindungsgemäß Faser-Scheben-Gemische fibrilliert werden. Derartige Gemische sind kostengünstiger als die Verwendung reiner Fasern als Ausgangsmaterial und sind bei speziellen Anwendungen, bei denen zusätzliche Füllstoffe erwünscht sind, vorteilhaft.

Unter Scheben versteht man die nicht Bastfasern enthaltenen, holzigen Bestandteile der Faserpflanzen.

Das Faser-Scheben-Gemisch wird als Ausgangsmaterial für die Fibrillierung, wie sie im ersten und zweiten Ausführungsbeispiel beschrieben ist, verwendet. Nach Durchführung der Fibrillierung erhält man fibrillierte Elementarfasern der Pflanzen bzw. organischen Naturfasern einerseits und gemahlene Scheben andererseits. Um weitgehend schebenfreie Verstärkungs- oder Prozeßfasern zu erhalten, kann der Schebenanteil des Ausgangsprodukts unter 10 Gew.-%, vorteilhaft unter 2 Gew.-% liegen. Ist ein höherer Schebenanteil, beispielsweise als zusätzlicher Füllstoff gewünscht, liegt dieser typischerweise zwischen 25 Gew.-% und 75 Gew.-% (Ganzpflanze). Allgemein kann der Schebenanteil zwischen 0 Gew.-% und 95 Gew.-% liegen.

7. <u>Reibbeläge</u>

Reibbeläge umfassen neben den erfindungsgemäßen Fasern im allgemeinen organische und/oder anorganische Füllstoffe, Schmierstoffe, organische Bindemittel und/oder Metalle oder Metallverbindungen. Im allgemeinen enthalten die Reibbeläge etwa 0 bis 70 Gew.-%, insbesondere 1 bis 70 Gew.-%, Metalle, etwa 3 bis 50 Gew.-% Füllstoffe, etwa 10 bis 45 Gew.-% Schmierstoffe und etwa 3 bis 25 Gew.-% Fasern. Als Schmierstoffe sind z.B. Graphit, Molybdändisulfid, Antimontrisulfid, Bleisulfid oder Zinnsulfide ($SnS$, $SnS_2$, $Sn_2S_3$(Sn(II)(IV)mischsulfid)) brauchbar. Wenn Zinnsulfide als Schmierstoffe verwendet werden, sind sie im allgemeinen in einer Menge von 0,5 bis 90 Gew.-%, vorzugsweise 1 bis 60 Gew.-%, besonders bevorzugt 2 bis 30 Gew.-% und insbesondere 2 bis 8 Gew.-%, bezogen auf die Gesamtmenge der Schmierstoffe, enthalten, wobei Zinnsulfid bevorzugt als alleiniges Metallsulfid in der Schmierstoffgruppe verwendet wird.

Die erfindungsgemäßen Fasern können demnach in Additiven für Reibbeläge, insbesondere in Verbindung mit Zinnsulfiden als Schmierstoffe enthalten sein. Der Gewichtsanteil der erfindungsgemäßen Fasern in solchen Additiven ist dabei zwischen 5 und 95 Gew.-%, vorteilhafterweise zwischen 30 und 70 Gew.-%.

**Patentansprüche**

1. Verstärkungs- und/oder Prozeßfasern auf der Basis von Pflanzenfasern, deren Elementarfasern fibrilliert sind, **dadurch gekennzeichnet,**
   **daß** die Elementarfasern einen Fibrillenanteil aufweisen, der größer als 3 Flächenprozent und kleiner als 50 Flächenprozent ist und dass die Verstärkungs- und/oder Prozessfasern erhältlich sind durch Mahlen der Pflanzenfasern in einer Wirbelluftmahlanlage.

**2.** Fasern nach Anspruch 1, **dadurch gekennzeichnet, daß** die Fasern auf Flachs-, Hanf-, Sisal-, Jute- oder Ramiefasern basieren.

**3.** Verstärkungs- und/oder Prozeßfasern, die ein Gemisch aus Fasern nach Anspruch 1 oder 2 und fibrillierten Aramidfasern umfassen.

**4.** Fasern nach Anspruch 3, **dadurch gekennzeichnet, daß** der Gewichtsanteil der Fasern nach Anspruch 1 oder 2 zwischen 10 % und 90 % liegt.

**5.** Fasern nach Anspruch 3 oder 4, **dadurch gekennzeichnet, daß** der Gewichtsanteil der Fasern nach Anspruch 1 oder 2 zwischen 50 % und 80 % liegt.

**6.** Verstärkungs- und/oder Prozeßfasern, die ein Gemisch aus Fasern nach Anspruch 1 oder 2 und Scheben umfassen.

**7.** Faser nach Anspruch 6, **dadurch gekennzeichnet, daß** der Gewichtsanteil der Scheben kleiner als 10 % ist.

**8.** Faser nach Anspruch 6, **dadurch gekennzeichnet, daß** der Gewichtsanteil der Scheben zwischen 25 und 75 % liegt.

**9.** Additiv für Reibbeläge, enthaltend Fasern nach einem der Ansprüche 1 bis 8 und Zinnsulfide.

**10.** Additiv nach Anspruch 9, **dadurch gekennzeichnet, daß** der Gewichtsanteil der Fasern zwischen 5 und 95 Gew.-% liegt.

**11.** Reibbelag, umfassend organische und/oder anorganische Füllstoffe, Schmierstoffe, organische Bindemittel und/oder Metalle oder Metallverbindungen, **dadurch gekennzeichnet, daß** der Reibbelag Fasern nach einem der Ansprüche 1 bis 8 enthält.

**12.** Reibbelag nach Anspruch 11, **dadurch gekennzeichnet, daß** Zinnsulfide in einer Menge von 0,5 bis 90 Gew.-%, bezogen auf die Gesamtmenge der Schmierstoffe, enthalten sind.

**13.** Dichtung, **dadurch gekennzeichnet, daß** sie Fasern nach einem der Ansprüche 1 bis 8 enthält.

**14.** Verfahren zur Herstellung von Verstärkungs- und/oder Prozeßfasern auf der Basis von Pflanzenfasern, **dadurch gekennzeichnet,**
**daß** das Fasermaterial in einer Wirbelluftmahlanlage gemahlen wird.

**15.** Verfahren nach Anspruch 14, **dadurch gekennzeichnet, daß** das Fasermaterial vor dem Mahlen durch Ultraschall aufgeschlossen wurde.

**16.** Verfahren nach Anspruch 14 oder 15, **dadurch gekennzeichnet, daß** als Ausgangsmaterial ein Faser-Scheben-Gemisch verwendet wird.

**Claims**

**1.** Reinforcing and/or process fibres based on vegetable fibres whose elementary fibres are fibrillated, **characterized in that** the elementary fibres have a fibril content greater than 3 area per cent and less than 50 area per cent and that the reinforcing and/or process fibres are obtainable by grinding the vegetable fibres in an eddied air grinder.

**2.** Fibres according to Claim 1, **characterized in that** the fibres are based on flax, hemp, sisal, jute or ramie fibres.

**3.** Reinforcing and/or process fibres comprising a mixture of fibres according to Claim 1 or 2 and fibrillated aramid fibres.

**4.** Fibres according to Claim 3, **characterized in that** the weight fraction of the fibres according to Claim 1 or 2 is between 10% and 90%.

**5.** Fibres according to Claim 3 or 4, **characterized in that** the weight fraction of the fibres according to claim 1 or 2 is between 50% and 80%.

6.  Reinforcing and/or process fibres comprising a mixture of fibres according to Claim 1 or 2 and shives.

7.  Fibre according to Claim 6, **characterized in that** the weight fraction of the shives is less than 10%.

8.  Fibre according to Claim 6, **characterized in that** the weight fraction of the shives is between 25 and 75%.

9.  Additive for friction linings, containing fibres according to any of Claims 1 and 8 and tin sulphides.

10. Additive according to Claim 9, **characterized in that** the weight fraction of the fibres is between 5 and 95% by weight.

11. Friction lining comprising organic and/or inorganic fillers, lubricating materials, organic binders and/or metals or metal compounds, **characterized in that** the friction lining contains fibres according to any of Claims 1 to 8.

12. Friction lining according to Claim 11, **characterized in that** tin sulphides are present in an amount of 0.5 to 90% by weight, based on the total amount of the lubricating materials.

13. Gasket, **characterized in that** it contains fibres according to any of Claims 1 to 8.

14. Process for producing reinforcing and/or process fibres based on vegetable fibres, **characterized in that** the fibre material is ground in an eddied air grinder.

15. Process according to Claim 14, **characterized in that** the fibre material was ultrasonicated before grinding.

16. Process according to Claim 14 or 15, **characterized in that** the starting material used is a fibre-shives mixture.


## Revendications

1.  Fibres de renfort et/ou de traitement à base de fibres végétales dont les fibres élémentaires sont fibrillées, **caractérisées en ce que** les fibres élémentaires présentent une fraction de fibrilles supérieure à 3 % en surface et inférieure à 50 % en surface et les fibres de renfort et/ou de traitement peuvent être obtenues par broyage des fibres végétales dans un broyeur à cyclone.

2.  Fibres selon la revendication 1, **caractérisées en ce qu'**elles sont à base de fibres de lin, de chanvre, de sisal, de jute ou de ramie.

3.  Fibres de renfort et/ou de traitement renfermant un mélange de fibres selon la revendication 1 ou la revendication 2 et des fibres d'aramide fibrillées.

4.  Fibres selon la revendication 3, **caractérisées en ce que** la fraction pondérale des fibres selon la revendication 1 ou la revendication 2 est comprise entre 10 et 90 %.

5.  Fibres selon la revendication 3 ou la revendication 4, **caractérisées en ce que** la fraction pondérale des fibres selon la revendication 1 ou la revendication 2 est comprise entre 50 et 80 %.

6.  Fibres de renfort et/ou de traitement renfermant un mélange de fibres selon la revendication 1 ou la revendication 2 et des chènevottes.

7.  Fibres selon la revendication 6, **caractérisées en ce que** la fraction pondérale des chènevottes est inférieure à 10 %.

8.  Fibres selon la revendication 6, **caractérisées en ce que** la fraction pondérale des chènevottes est comprise entre 25 et 75 %.

9.  Additif pour revêtements d'adhérence, contenant des fibres selon l'une quelconque des revendications 1 à 8 et des sulfures d'étain.

10. Additif selon la revendication 9, **caractérisé en ce que** la fraction pondérale des fibres est comprise entre 5 et 95 % en poids.

**11.** Revêtement d'adhérence comprenant des charges organiques et/ou inorganiques, des lubrifiants, des liants organiques et/ou des métaux ou des composés métalliques, **caractérisé en ce que** le revêtement d'adhérence contient de fibres selon l'une quelconque des revendications 1 à 8.

**12.** Revêtement d'adhérence selon la revendication 11, **caractérisé en ce qu'**il renferme des sulfures d'étain dans une quantité de 0,5 à 90 % en poids, par rapport à la quantité totale de lubrifiants.

**13.** Joint, **caractérisé en ce qu'**il renferme des fibres selon l'une quelconque des revendications 1 à 8.

**14.** Procédé de fabrication de fibres de renfort et/ou de traitement à base de fibres végétales, **caractérisé en ce que** les fibres sont broyées dans un broyeur à cyclone.

**15.** Procédé selon la revendication 14, **caractérisé en ce que** les fibres ont été traitées aux ultrasons avant le broyage.

**16.** Procédé selon la revendication 14 ou la revendication 15, **caractérisé en ce qu'**on utilise comme matériau de départ un mélange de fibres et de chènevottes.

Figur 1

Figur 2

## Figur 3

Figur 4

**IN DER BESCHREIBUNG AUFGEFÜHRTE DOKUMENTE**

**In der Beschreibung aufgeführte Patentdokumente**

- DE 19703634 A1

- DE 3543370 A1